# EUROPEAN PATENT SPECIFICATION

(11) **EP 4 485 676 B1**
(45) Date of publication and mention of the grant of the patent: **02.09.2026**
(21) Application number: 24172490.5
(22) Date of filing: 25.04.2024
(51) Int. Cl.: H01M 50/533

(54) **ELECTRODE PLATE AND METHOD OF PREPARING ELECTRODE PLATE**
ELEKTRODENPLATTE UND VERFAHREN ZUR HERSTELLUNG EINER ELEKTRODENPLATTE
PLAQUE D'ÉLECTRODE ET PROCÉDÉ DE PRÉPARATION DE PLAQUE D'ÉLECTRODE

(30) Priority: 27.06.2023 CN 202310768826
(43) Date of publication of application: 01.01.2025
(73) Proprietor: Hithium Tech HK Limited, Hong Kong (HK)
(72) Inventor: FU, Kuihui, Xiamen 361100 (CN)
(74) Representative: DREISS Patentanwälte PartG mbB

(56) References cited:
- CN-A- 114 614 211
- CN-A- 115 055 836
- CN-U- 219 203 436

## Description

### FIELD

The present disclosure relates to the field of battery technologies, and more particularly, to an electrode plate, a battery, an electric apparatus, and a method of preparing the electrode plate.

### BACKGROUND

In a battery cell structure of the lithium-ion battery, the tab is the metal conductor that leads positive and negative electrodes out of the battery cell, and the complete tab is mainly composed of the insulating sealant and the metal conductive substrate. The material, the size, and the lead-out way of the tab have a great influence on the multiplicity discharge performance and multiplicity cycle performance of the lithium-ion battery. In general, the magnitude of the energizing current is proportional to the cross-section of the wire, i.e., the larger the cross-section area of the wire, the larger the current is allowed to pass through the wire. The size of the tab is not only determined by the model of the battery, but also depends on the maximum discharging current required by the battery. Therefore, the shape of the tab is crucial in the structure of the battery.

With the existing tab structure, the tab may be deformed or damaged by the cutting waste material when cutting, which affects the overcurrent capability and consistency of the tab, and seriously leads to the scrapping of the electrode plate. The cutting method of the existing tab structure also limits the running speed of the apparatus. When the running speed of the apparatus is over 100m/min, there is a risk of cutting limitation, and the laser track cannot match the running speed of the apparatus. CN115055836A discloses a manufacturing method for an electrode plate by way of laser cutting, wherein however the electrode plate is cut by two different lasers.

### SUMMARY

The present invention aims to solve one of the technical problems in the related art at least to some extent. To this end, an object of the present invention is to provide a method of preparing an electrode plate according to claim 1. Dependent claims define further advantageous embodiments. With the method of the invention, the integrity of a tab shape is ensured, and a maximum current allowed to pass through the tab is ensured. In addition, the charging and discharging efficiency of the lithium-ion battery is ensured.

Additional aspects and advantages of the embodiments of the present disclosure will be given at least in part in the following description, or become apparent at least in part from the following description, or can be learned from practicing of the embodiments of the present disclosure.

### BRIEF DESCRIPTION OF THE DRAWINGS

The above and/or additional aspects and advantages of the present invention will become more apparent and more understandable from the following description of embodiments taken in connection with the accompanying drawings, in which:
FIG. 1 is a schematic view of a structure of an electrode plate in the related art.
FIG. 2 is a schematic view of a cutting path for cutting an electrode plate in the related art.
FIG. 3 is a schematic view of a structure of an electrode plate according to an embodiment of the present disclosure.
FIG. 4 is an enlarged view of a part P in FIG. 3;
FIG. 5 is a schematic view of a cutting path and a laser path for cutting an electrode plate according to an embodiment of the present disclosure.

Reference numerals are as follows:
100, tab; 101, first region, 102, second region; 103, first edge; 104, second edge; 105, third edge; 105-1, first arc section; 105-2, second arc section; 200, electrode plate body; 100', tab region; 200', electrode plate body region.

### DETAILED DESCRIPTION

Embodiments of the present disclosure will be described in detail below with reference to examples thereof as illustrated in accompanying drawings, throughout which same or similar elements, or elements having same or similar functions, are denoted by same or similar reference numerals. The embodiments described below with reference to the drawings are illustrative only, and are intended to explain the embodiments of the present disclosure.

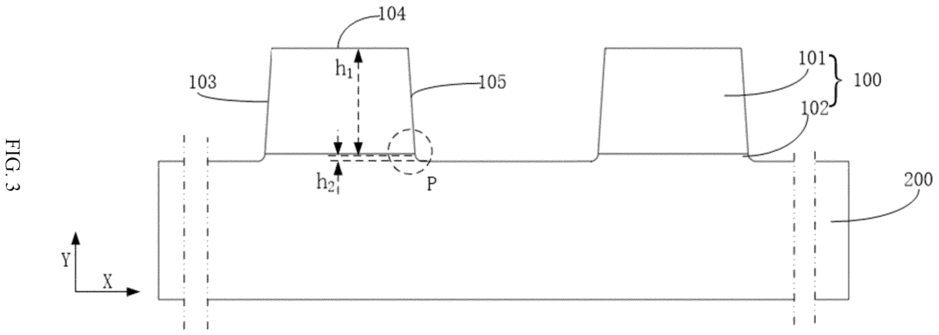

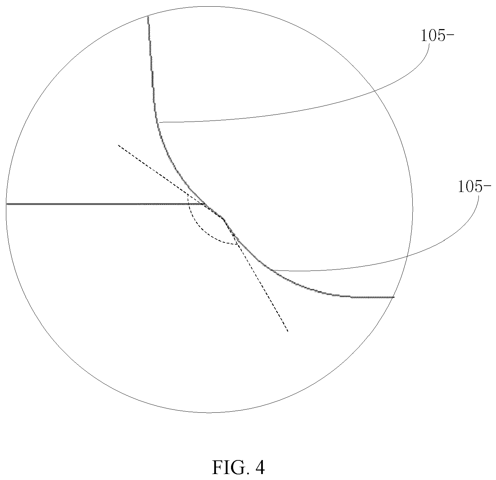

In one aspect of the present disclosure, an electrode plate is provided. According to the embodiment of the present disclosure, referring to FIG. 3 and FIG. 4, the electrode plate includes an electrode plate body 200 and a tab 100 located at least one end of the electrode plate body 200 in a width direction (i.e. Y direction) of the electrode plate body 200. The tab 100 has a first edge 103, a second edge 104, and a third edge 105 that are connected in sequence. An end of the first edge 103 away from the second edge 104 is connected to the electrode plate body 200. An end of the third edge 105 away from the second edge 104 is connected to the electrode plate body 200. The third edge 105 has a first arc section 105-1 and a second arc section 105-2. A connection position between the first arc section 105-1 and the second arc section 105-2 has a sharp corner. In the present disclosure, the sharp corner (i.e., an intersection point of cutting tracks) is formed at the connection position between the first arc section 105-1 and the second arc section 105-2 of the third edge 105 of the tab 100, i.e., a cutting end point of a cutting cycle is positioned at a relatively middle region of the tab edge. Therefore, a problem that tab tearing and folding are easily caused by positioning the cutting end point at an end region of the tab edge is avoided, and the cutting stability of a laser in a high-speed cutting process can be satisfied. In this way, the integrity of the tab shape is ensured, and the maximum current allowed to pass through the tab is ensured. In addition, the charging and discharging efficiency of the lithium-ion battery is ensured.

The principle by which the electrode plate proposed in the present disclosure can achieve the above-mentioned advantageous effects will be described in detail below.

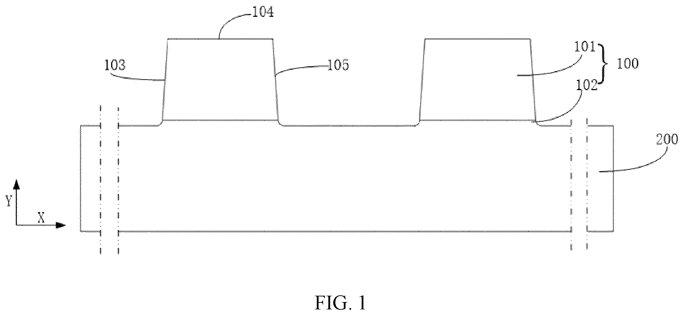

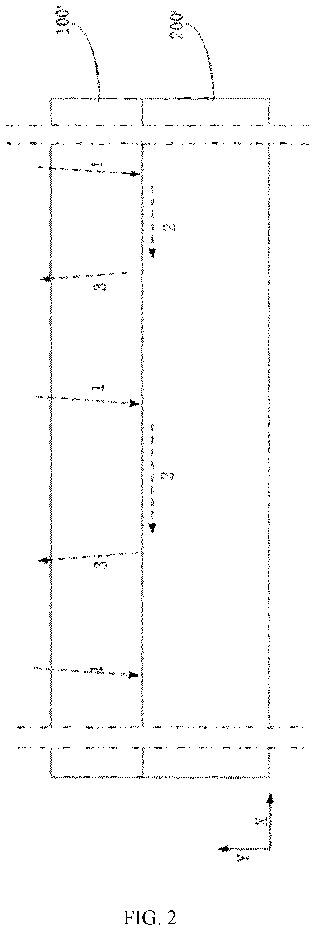

The electrode plate in the related art is shown in FIG. 1. A smooth arc surface (i.e., the first edge 103 and the third edge 105) is provided at each of two sides of the tab in a length direction (i.e., X direction), and no sharp corner, i.e., no intersection point of cutting tracks, is formed at each of the two smooth arc surfaces. However, the tab structure shown in FIG. 1 cannot satisfy the cutting stability of the laser during high-speed cutting. In detail, a cutting method of an electrode plate structure shown in FIG. 1, which may be referred to FIG. 2, includes the following steps: step a) of providing an electrode plate substrate having an electrode plate body region 200' and a tab region 100' located at a side of the electrode plate body region 200' in a width direction (i.e., Y direction) of the electrode plate body region 200', and cutting, by using a laser, the electrode plate substrate from an end of the tab region 100' away from the electrode plate body region 200' towards the electrode plate body region 200' until top of the electrode plate body region 200', forming a first edge 103, which is shown in a path 1 in FIG. 2; step b) of cutting, by using the laser, the electrode plate substrate by a predetermined distance from a cutting end point of the step a) along a length direction (i.e., X direction) of the electrode plate substrate, which is shown in a path 2 in FIG. 2; step c) of cutting the electrode plate substrate by using the laser from a cutting end point of the step b) along an arc line and along a direction away from the electrode plate body region 200' until a top of the tab region 100', to form a third edge 105, which is shown in a path 3 in FIG. 2. A cutting start point in the step a) and a cutting start point in the step c) are spaced apart by a predetermined distance in the length direction of the electrode plate substrate. At this time, a first scrap between adjacent tabs is cut off. The step a) to the step c) sequentially are repeated for a second time to form a first tab at the electrode plate substrate. Then, the step a) to the step c) sequentially are repeated for a third time to form a second tab at the electrode plate substrate, and the steps are repeated until all tabs at the electrode plate substrate are formed by cutting. However, in the cutting process of the tab, a moving direction of the electrode plate substrate and a moving direction between the scrap to be cut off under the action of the conveying belt are different, and a relative speed between the electrode plate substrate and the scrap to be cut off is very high. Therefore, in the step c), when the electrode plate substrate is cut to a position close to the top end of the electrode plate substrate, tearing easily occurs at the top end of the tab (i.e., an edge region of the tab) between the electrode plate substrate and the scrap to be cut in different directions, resulting in an incomplete tab shape formed by cutting, thus affecting the overcurrent ability and consistency of the tab and affecting the charge and discharge efficiency of the lithium-ion battery. In addition, in the step c), when the electrode plate substrate is cut to the position close to the top end of the electrode plate substrate, shaking or fluctuation of an apparatus will cause tearing at the top of the tab, resulting in the incomplete tab shape formed by cutting.

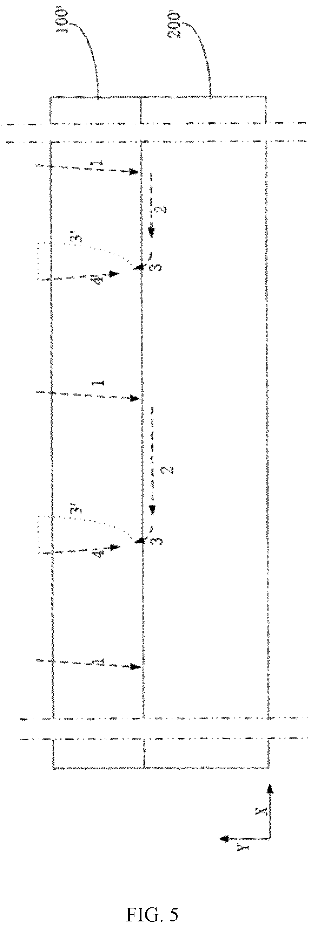

In order to solve the above problems, the present invention provides a new method of manufacturing an electrode plate. Referring to FIG. 3 and FIG. 4, the electrode plate structure can adapt to the cutting method of the present disclosure, and an intersection point of cutting tracks (i.e. sharp corner formed by the intersection of two arcs) is positioned at a connection position between the first arc section 105-1 and the second arc section 105-2 of the third edge 105 of the tab. Positioning a cutting end point of a cutting cycle in a relatively middle region of the tab edge avoids a problem that positioning the cutting end point at an end region of the tab edge is easy to cause tab tearing. Therefore, the cutting stability of the laser in the high-speed cutting process can be met, thereby ensuring the integrity of the tab shape, ensuring the maximum current allowed to pass through the tab, and ensuring the charging and discharging efficiency of the lithium-ion battery. In an exemplary embodiment of the present disclosure, referring to FIG. 5, the cutting method of the electrode plate includes: step S100 of providing an electrode plate substrate having an electrode plate body region 200' and a tab region 100' located at a side of the electrode plate body region 200' in a width direction of the electrode plate body region 200', and cutting, by using a laser, the electrode plate substrate from an end of the tab region 100' away from the electrode plate body region 200' towards the electrode plate body region 200' until top of the electrode plate body region 200', forming a first edge 103, which is shown in a path 1 in FIG. 5; step S200 of cutting, by using the laser, the electrode plate substrate by a predetermined length from a cutting end point in the step S100 along a length direction of the electrode plate substrate, which is shown in a path 2 in FIG. 5; step S300 of cutting the electrode plate substrate by using the laser from a cutting end point in the step S200 along an arc line and along a direction away from the electrode plate body region 200' till a predetermined position, to form a second arc section 105-2, which is shown in a path 3 in FIG. 5; and step S400 of cutting the electrode plate substrate by using the laser from the end of the tab region 100' away from the electrode plate body region 200' towards a cutting end point in the step S300 along an arc line till intersecting with a cutting track in the step S300, to form a first arc section 105-1. A sharp corner is formed at a connection position between the first arc section 105-1 and the second arc section 105-2, which is shown in a path 4 in FIG. 5. According to the present disclosure, the step c) in the related art is divided into two steps for cutting, i.e., the laser is turned off after cutting to the predetermined position in the step S300, then a laser is moved to the top end of tab region 100' to cut, and the electrode plate substrate is cut along an arc line and in the direction of the cutting end point in the step S300 till intersecting with the cutting track in the step S300. According to the cutting method, the cutting end point of a cycle is positioned at the relatively middle region of the tab edge, allowing the problem that the tab tearing is easily caused by arranging the cutting end point in the end area of the tab edge to be avoided.

The tab 100 has a first region 101 and a second region 102 located at a side of the first region 101 in a width direction of the first region 101. A side of second region 102 away from first region 101 is connected to the electrode plate body. The second region 102 has an active material layer provided on at least part of a surface of the second region, thereby further improving the charge and discharge capacity of the battery as a whole.

In an embodiment of the present disclosure, the sharp corner formed at the connection position between the first arc section 105-1 and the second arc section 105-2 may be formed at the edge of the first region 101, or may be formed at the edge of the second region 102, preferably formed at the edge of the second region 102.

According to some embodiments of the present disclosure, the sharp corner formed at the connection position between the first arc section 105-1 and the second arc section 105-2 is formed at the edge of the second region 102. Referring to FIG. 3 and FIG. 4, the first arc section 105-1 is formed at an edge of the first region 101 and extends to an edge of the second region 102. The second arc section 105-2 is formed at the edge of the second region 102. The first arc section 105-1 and the second arc section 105-2 intersect at the edge of the second region 102, i.e., the sharp corner is formed at the edge of the second region 102. Since the second region 102 has the surface provided with the active material layer, which has a thickness about 80 microns to 120 microns and a hardness of the surface of the second region 102 is relatively large, the tab tearing at the cutting end point is better avoided when the sharp corner (i.e., the cutting end point) is formed at the second region 102.

Further, as shown above, since the second region 102 has the surface provided with the active material layer, which has a thickness about 80 microns to 120 microns and a hardness of the surface of the second region 102 is relatively large, the sharp corner (i.e., the cutting end point) is only required to be a certain distance from an end of the second region 102 close to the electrode plate body. As some specific examples, a width h2 of the second arc section 105-2 along the Y direction is greater than or equal to 2 mm.

According to still other embodiments of the present disclosure, the second arc section 105-2 is formed at an edge of the second region 102 and extends to an edge of the first region 101. The first arc section 105-1 is formed at the edge of the first region 101. The first arc section 105-1 intersects with the second arc section 105-2 at the edge of the first region 101, and a sharp corner is formed at the edge of the first region 101. Further, a width h1 of the first arc section 105-1 in the Y direction is greater than or equal to 5 mm. Therefore, a distance between the sharp corner (i.e., the cutting end point) and the tab end is further ensured, i.e., the cutting end point of a cutting cycle is ensured to be positioned in the relatively middle region of the tab arc surface. In this way, the problem that the tab tearing is easily caused by positioning the cutting end point at the end area of the tab arc surface is further avoided.

According to some embodiments of the present disclosure, referring to FIG. 4, an angle between the first arc section 105-1 and the second arc section 105.2 is α, where 90 degrees <α <180 degrees (e.g., 100/110/120/130/140/150/160/170 degrees). That is, an angle between a tangent line passing through a final cutting point of the first arc section 105-1 and a tangent line passing through a final cutting point of the second arc section 105-2 is α, where 90 degrees <α <180 degrees. Therefore, this cutting arc is easier to achieve, i.e., the electrode plate of this structure is easier to realize in a laser preparation process.

In embodiments of the present disclosure, a width of the first region 101 and a width of the second region 102 may be set according to different requirements of different types of batteries for tabs. As some specific examples, a ratio of a width of the first region 101 to a width of the second region 102 ranges from 5:1 to 5:2.

In the embodiment of the present disclosure, shapes of two vertex angles of the first region 101 away from the second region 102 are not particularly limited, and can be set by a person skilled in the art based on actual requirements. For example, the top of the first region 101 can be cut at a right angle, an R angle, or an oblique angle.

In the present invention, a method of preparing the electrode plate of the above embodiment is provided. The method includes the following steps.

Step S100: providing an electrode plate substrate having an electrode plate body region 200' and a tab region 100' located at a side of the electrode plate body region 200' in a width direction of the electrode plate body region 200', and cutting, by using a laser, the electrode plate substrate from an end of the tab region 100' away from the electrode plate body region 200' towards the electrode plate body region 200' until top of the electrode plate body region 200', forming a first edge 103, which is shown in a path 1 in FIG. 5.

Step S200: cutting, by using the laser, the electrode plate substrate by a predetermined length from a cutting end point in the step S100 along a length direction of the electrode plate substrate, which is shown in a path 2 in FIG. 5.

In this step, the predetermined length is cut along the length of the electrode plate substrate based on a predesign.

Step S300: cutting the electrode plate substrate by using the laser from a cutting end point in the step S200 along an arc line and along a direction away from the electrode plate body region 200' till a predetermined position, to form a second arc section 105-2, which is shown in a path 3 in FIG. 5.

In the step S300, the laser is turned off after cutting to the predetermined position, and then the laser is moved to the top end of tab region 100' to cut, where a moving track of the laser is shown as 3' in FIG. 5. The cutting end point in the step S300 may be located in a relatively middle region of the second region or a relatively middle region of the first region, thereby avoiding the problem that tab tearing is easily caused by positioning the cutting end point at the end region of the tab edge.

The predetermined position in the step S300 may be in the relatively middle region of the first region or in the relatively middle region of the second region.

Step S400: cutting the electrode plate substrate by using the laser from the end of the tab region 100' away from the electrode plate body region 200' towards a cutting end point in the step S300 along an arc line till intersecting with a cutting track in the step S300, to form a first arc section 105-1. A sharp corner is formed at a connection position between the first arc section 105-1 and the second arc section 105-2, which is shown in a path 4 in FIG. 5.

In this step, a cutting start point in the S100 and a cutting start point in the S400 are spaced apart by a predetermined distance in the length direction of the electrode plate substrate, and the predetermined distance is a length of the scrap to be cut. In this case, a first scrap between adjacent tabs is cut off. The step S100 to the step S400 sequentially are repeated for a second time to form a first tab at the electrode plate substrate. Then, the S100 to the step S400 sequentially are repeated for a third time to form a second tab at the electrode plate substrate, and the step S100 to the step S400 are repeated until all tabs at the electrode plate substrate are formed by cutting. In the embodiments of the present disclosure, a size of the scrap to be cut off and a size of the tab formed by cut may be set based on actual requirements. It can be noted that a side of the tab formed by cutting away from the electrode plate body is the second edge 104.

According to the present disclosure, the step c) in the related art is divided into two steps for cutting, namely, the laser is turned off after cutting to the predetermined position in the step S300, then the laser is moved to the end of tab region 100' away from the electrode plate body region 200' to cut, and the electrode plate substrate is cut along an arc line and along the direction of the cutting end point in the step S300 till intersecting with the cutting track in the step S300. According to the cutting method disclosed by the present disclosure, the cutting end point of a cycle is positioned at the relatively middle region of the tab edge, allowing the problem that the tab tearing is easily caused by positioning the cutting end point at the end region of the tab edge to be avoided. Therefore, the integrity of the tab shape is ensured, and the maximum current allowed to pass through the tab is ensured. In addition, the charging and discharging efficiency of the lithium-ion battery is ensured.

At the same time, the existing cutting method further limits an operating speed of the apparatus. When the operating speed of the apparatus is greater than 100m/min, the tab tearing will be too serious that the cutting process cannot be carried out normally, and the laser track cannot match the operating speed of the apparatus. According to the present disclosure, a cutting end point of a cycle is positioned at the relatively middle region of the tab edge, allowing the problem that the tab tearing is easily caused by positioning the cutting end point at the end region of the tab edge to be avoided. Therefore, the cutting speed of the laser can be improved on the premise of avoiding the tab tearing, to allow the tab cutting in a high speed of the apparatus to be achieved. As some specific examples, a cutting speed of the laser in each of the step 100, the step 200, the step 300, and the step 400 ranges from 80m/min to 200m/min (e.g. 80/100/120/140/160/180/200m/min, etc.).

In addition, the cutting can be finished by adopting one laser machine, and compared with a scheme adopting two laser machines, the method reduces cost while ensuring the integrity of the tab shape in the tab cutting process.

In some embodiments of the present disclosure, the tab region 100' has a width equal to a width of a tab obtained by cutting. Therefore, no waste edge in the width direction is generated in the cutting method.

In the embodiments of the present disclosure, a plurality of tabs may be formed at the electrode plate substrate after the cutting is completed, and the plurality of tabs is overlapped after a winding lamination process.

In a third aspect of the present disclosure, a battery is provided. According to the embodiment of the present disclosure, the battery includes the electrode plate of the above embodiment or the electrode plate formed by the method described in the above embodiment. Thus, the charging and discharging efficiency of the battery is ensured.

In an exemplary embodiment of the present disclosure, a positive electrode plate of the battery may be the electrode plate described in the above embodiments, and a negative electrode plate of the battery may be the electrode plate described in the above embodiments. Both the positive electrode plate and the negative electrode plate of the battery may be the electrode plate described in the above embodiments.

In a fourth aspect of the present disclosure, an electric apparatus is provided. According to the embodiment of the present disclosure, the electric apparatus includes the battery as described above. Therefore, the electric apparatus has all the advantages of the battery, which will not be described herein.

In an exemplary embodiment of the present disclosure, the electric apparatus may be, but is not limited to, a mobile phone, a tablet, a notebook computer, an electric toy, an electric tool, a battery car, an electric automobile, a ship, a spacecraft, and the like. The electric toy may include a stationary or mobile electric toy, such as a game machine, an electric car toy, an electric ship toy, an electric airplane toy, and the like. The spacecraft may include an airplane, a rocket, a space shuttle, a spacecraft, and the like.

In the description of this specification, description with reference to the terms "an embodiment", "some embodiments", "exemplary embodiments", "examples" "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics may be combined in any one or more embodiments or examples in a suitable manner. In addition, different embodiments or examples and features of different embodiments or examples described in the specification may be combined by those skilled in the art without mutual contradiction.

Although embodiments of the present disclosure have been shown and described above, it should be understood that the above embodiments are merely exemplary, and for those skilled in the art, changes, alternatives, and modifications can be made to the above embodiments.

## Claims

1. A method of preparing an electrode plate, wherein the electrode plate comprises an electrode plate body, and a tab located at least one end of the electrode plate body in a width direction of the electrode plate body, the tab having a first edge, a second edge, and a third edge that are connected in sequence, wherein an end of the first edge away from the second edge is connected to the electrode plate body, an end of the third edge away from the second edge is connected to the electrode plate body, and the third edge has a first arc section and a second arc section, a connection position between the first arc section and the second arc section having a sharp corner, wherein the tab has a first region and a second region located at a side of the first region in a width direction of the first region, a side of the second region away from the first region being connected to the electrode plate body, and the second region having an active material layer provided on at least part of a surface of the second region,
wherein the method comprises:
step 1 of providing an electrode plate substrate having an electrode plate body region and a tab region located at a side of the electrode plate body region in a width direction of the electrode plate body region, and cutting, by using a single laser, the electrode plate substrate from an end of the tab region away from the electrode plate body region towards the electrode plate body region until top of the electrode plate body region, forming a first edge;
step 2 of cutting, by using the single laser, the electrode plate substrate by a predetermined distance from a cutting end point of the step 1 along a length direction of the electrode plate substrate;
step 3 of cutting the electrode plate substrate by using the single laser from a cutting end point of the step 2 along an arc line and along a direction away from the electrode plate body region till a predetermined position, to form a second arc section; and
step 4 of cutting the electrode plate substrate by using the single laser from the end of the tab region away from the electrode plate body region towards a cutting end point of the step 3 along an arc line till intersecting with a cutting track of the step 3, to form a first arc section, a sharp corner being formed at a connection position between the first arc section and the second arc section,
wherein a cutting start point in the step 1 and a cutting start point in the step 4 are spaced apart by a predetermined distance in the length direction of the electrode plate substrate.

2. The method according to claim 1, wherein a cutting speed of the single laser in each of the step 1, the step 2, the step 3, and the step 4 ranges from 80m/min to 200m/min.

3. The method according to claim 1, wherein the tab region has a width equal to a width of a tab obtained by cutting.

4. The method according to any one of claims 1 to 3, wherein:
the first arc section is formed at an edge of the first region and extends to an edge of the second region;
the second arc section is formed at the edge of the second region; and
the sharp corner is formed at the edge of the second region.

5. The method according to any one of claims 1 to 3, wherein:
the second arc section is formed at an edge of the second region and extends to an edge of the first region;
the first arc section is formed at the edge of the first region; and
the sharp corner is formed at the edge of the first region.

6. The method according to any one of claims 1 to 5, wherein an angle between the first arc section and the second arc section is α, where 90 degrees <α <180 degrees.

7. The method according to any one of claims 1 to 5, wherein a ratio of a width of the first region to a width of the second region ranges from 5:1 to 5:2.

## Patentansprüche

1. Verfahren zum Herstellen einer Elektrodenplatte, wobei die Elektrodenplatte einen Elektrodenplattenkörper und eine Elektrodenlasche umfasst, die sich an wenigstens einem Ende des Elektrodenplattenkörpers in einer Breitenrichtung des Elektrodenplattenkörpers befindet, wobei die Elektrodenlasche eine erste Kante, eine zweite Kante und eine dritte Kante aufweist, die der Reihe nach miteinander verbunden sind, wobei ein von der zweiten Kante abgewandtes Ende der ersten Kante mit dem Elektrodenplattenkörper verbunden ist, ein von der zweiten Kante abgewandtes Ende der dritten Kante mit dem Elektrodenplattenkörper verbunden ist, wobei die dritte Kante einen ersten Bogenabschnitt und einen zweiten Bogenabschnitt aufweist, wobei an einer Verbindungsposition zwischen dem ersten Bogenabschnitt und dem zweiten Bogenabschnitt eine scharfe Ecke vorhanden ist, wobei die Elektrodenlasche einen ersten Bereich und einen zweiten Bereich aufweist, der sich an einer Seite des ersten Bereichs in einer Breitenrichtung des ersten Bereichs befindet, wobei eine von dem ersten Bereich abgewandte Seite des zweiten Bereichs mit dem Elektrodenplattenkörper verbunden ist und der zweite Bereich eine Aktivmaterialschicht aufweist, die auf wenigstens einem Teil einer Oberfläche des zweiten Bereichs vorgesehen ist, wobei das Verfahren umfasst:
Schritt 1 des Bereitstellens eines Elektrodenplattensubstrats, das einen Elektrodenplattenkörperbereich und einen Laschenbereich aufweist, der sich an einer Seite des Elektrodenplattenkörperbereichs in einer Breitenrichtung des Elektrodenplattenkörperbereichs befindet, und des Schneidens, unter Verwendung eines einzigen Lasers, des Elektrodenplattensubstrats von einem von dem Elektrodenplattenkörperbereich abgewandten Ende des Laschenbereichs in Richtung des Elektrodenplattenkörperbereichs bis zu einer Oberseite des Elektrodenplattenkörperbereichs, wodurch eine erste Kante gebildet wird;
Schritt 2 des Schneidens, unter Verwendung des einzigen Lasers, des Elektrodenplattensubstrats um eine vorbestimmte Strecke von einem Schnittendpunkt des Schritts 1 aus entlang einer Längsrichtung des Elektrodenplattensubstrats;
Schritt 3 des Schneidens des Elektrodenplattensubstrats unter Verwendung des einzigen Lasers von einem Schnittendpunkt des Schritts 2 entlang einer Bogenlinie und entlang einer von dem Elektrodenplattenkörperbereich wegführenden Richtung bis zu einer vorbestimmten Position, um einen zweiten Bogenabschnitt zu bilden; und
Schritt 4 des Schneidens des Elektrodenplattensubstrats unter Verwendung des einzigen Lasers von dem von dem Elektrodenplattenkörperbereich abgewandten Ende des Laschenbereichs aus in Richtung eines Schnittendpunkts des Schritts 3 entlang einer Bogenlinie, bis sie sich mit einem Schnittbahn des Schritts 3 schneidet, um einen ersten Bogenabschnitt zu bilden, wobei an einer Verbindungsposition zwischen dem ersten Bogenabschnitt und dem zweiten Bogenabschnitt eine scharfe Ecke gebildet wird,
wobei ein Schnittstartpunkt in Schritt 1 und ein Schnittstartpunkt in Schritt 4 durch einen vorbestimmten Abstand in der Längsrichtung des Elektrodenplattensubstrats beabstandet sind.

2. Verfahren nach Anspruch 1, wobei die Schnittgeschwindigkeit des einzigen Lasers in jedem der Schritte 1, 2, 3 und 4 im Bereich von 80 m/min bis 200 m/min liegt.

3. Verfahren nach Anspruch 1, wobei der Laschenbereich eine Breite aufweist, die gleich einer Breite einer durch Schneiden erhaltenen Elektrodenlasche ist.

4. Verfahren nach einem der Ansprüche 1 bis 3, wobei:
der erste Bogenabschnitt an einer Kante des ersten Bereichs ausgebildet ist und sich bis zu einer Kante des zweiten Bereichs erstreckt;
der zweite Bogenabschnitt an der Kante des zweiten Bereichs gebildet ist; und
die scharfe Ecke an der Kante des zweiten Bereichs gebildet ist.

5. Verfahren nach einem der Ansprüche 1 bis 3, wobei:
der zweite Bogenabschnitt an einer Kante des zweiten Bereichs ausgebildet ist und sich bis zu einer Kante des ersten Bereichs erstreckt;
der erste Bogenabschnitt an der Kante des ersten Bereichs gebildet ist; und
die scharfe Ecke an der Kante des ersten Bereichs gebildet ist.

6. Verfahren nach einem der Ansprüche 1 bis 5, wobei ein Winkel zwischen dem ersten Bogenabschnitt und dem zweiten Bogenabschnitt α beträgt, wobei 90 Grad < α < 180 Grad.

7. Verfahren nach einem der Ansprüche 1 bis 5, wobei ein Verhältnis einer Breite des ersten Bereichs zu einer Breite des zweiten Bereichs im Bereich von 5:1 bis 5:2 liegt.

## Revendications

1. Procédé de préparation d'une plaque d'électrode, dans lequel la plaque d'électrode comprend un corps de plaque d'électrode, et une languette située à au moins une extrémité du corps de plaque d'électrode dans une direction de la largeur du corps de plaque d'électrode, la languette ayant un premier bord, un deuxième bord et un troisième bord qui sont reliés en séquence, dans lequel une extrémité du premier bord à l'opposé du deuxième bord est reliée au corps de plaque d'électrode, une extrémité du troisième bord à l'opposé du deuxième bord est reliée au corps de plaque d'électrode, et le troisième bord a une première section d'arc et une deuxième section d'arc, une position de connexion entre la première section d'arc et la deuxième section d'arc ayant un angle vif, dans lequel la languette a une première région et une deuxième région située sur un côté de la première région dans une direction de la largeur de la première région, un côté de la deuxième région à l'opposé de la première région étant relié au corps de plaque d'électrode, et la deuxième région ayant une couche de matériau actif prévue sur au moins une partie d'une surface de la deuxième région,
dans lequel le procédé comprend :
l'étape 1 consistant à fournir un substrat de plaque d'électrode ayant une région de corps de plaque d'électrode et une région de languette située sur un côté de la région de corps de plaque d'électrode dans une direction de la largeur de la région de corps de plaque d'électrode, et à couper, en utilisant un laser unique, le substrat de plaque d'électrode depuis une extrémité de la région de languette à l'opposé de la région de corps de plaque d'électrode vers la région de corps de plaque d'électrode jusqu'au sommet de la région de corps de plaque d'électrode, en formant un premier bord ;
l'étape 2 consistant à couper, en utilisant le laser unique, le substrat de plaque d'électrode sur une distance prédéterminée à partir d'un point de fin de coupe de l'étape 1 le long d'une direction de la longueur du substrat de plaque d'électrode ;
l'étape 3 consistant à couper le substrat de plaque d'électrode en utilisant le laser unique à partir d'un point de fin de coupe de l'étape 2 le long d'une ligne d'arc et le long d'une direction s'éloignant de la région de corps de plaque d'électrode jusqu'à une position prédéterminée, pour former une deuxième section d'arc ; et
l'étape 4 consistant à couper le substrat de plaque d'électrode en utilisant le laser unique depuis l'extrémité de la région de languette à l'opposé de la région de corps de plaque d'électrode vers un point de fin de coupe de l'étape 3 le long d'une ligne d'arc jusqu'à l'intersection avec une piste de coupe de l'étape 3, pour former une première section d'arc, un angle vif étant formé à une position de connexion entre la première section d'arc et la deuxième section d'arc, dans lequel un point de début de coupe à l'étape 1 et un point de début de coupe à l'étape 4 sont espacés d'une distance prédéterminée dans la direction de la longueur du substrat de plaque d'électrode.

2. Procédé selon la revendication 1, dans lequel une vitesse de coupe du laser unique dans chacune de l'étape 1, l'étape 2, l'étape 3 et l'étape 4 est comprise entre 80 m/min et 200 m/min.

3. Procédé selon la revendication 1, dans lequel la région de languette a une largeur égale à une largeur d'une languette obtenue par coupe.

4. Procédé selon l'une quelconque des revendications 1 à 3, dans lequel :
la première section d'arc est formée à un bord de la première région et s'étend jusqu'à un bord de la deuxième région ;
la deuxième section d'arc est formée au bord de la deuxième région ; et
l'angle vif est formé au bord de la deuxième région.

5. Procédé selon l'une quelconque des revendications 1 à 3, dans lequel :
la deuxième section d'arc est formée à un bord de la deuxième région et s'étend jusqu'à un bord de la première région ;
la première section d'arc est formée au bord de la première région ; et
l'angle vif est formé au bord de la première région.

6. Procédé selon l'une quelconque des revendications 1 à 5, dans lequel un angle entre la première section d'arc et la deuxième section d'arc est α, où 90 degrés < α < 180 degrés.

7. Procédé selon l'une quelconque des revendications 1 à 5, dans lequel un rapport d'une largeur de la première région à une largeur de la deuxième région est compris entre 5:1 et 5:2.
